# EUROPÄISCHE PATENTSCHRIFT

(11) **EP 0 898 860 B1**
(45) Veröffentlichungstag und Bekanntmachung des Hinweises auf die Patenterteilung: **23.10.2002**
(21) Anmeldenummer: 98114444.7
(22) Anmeldetag: 01.08.1998
(51) Int. Cl.: A01C 5/06

(54) **Normalsäschar**
Normal seeding coulter
Soc à semer normal

(30) Priorität: 25.08.1997 DE 19736970
(43) Veröffentlichungstag der Anmeldung: 03.03.1999
(73) Patentinhaber: Amazonen-Werke H. Dreyer GmbH & Co. KG, 49205 Hasbergen (DE)
(72) Erfinder: Steenken, Bernd, 49751 Sögel (DE)

(56) Entgegenhaltungen:
- GB-A- 2 133 261
- US-A- 5 370 070
- US-A- 5 601 041

## Beschreibung

Die Erfindung betrifft ein Normalsäschar mit einem Scharkörper und einer auf der unteren Vorderseite des Scharkörpers mittels Halterungsmittel befestigten Scharspitze.

Derartige Normalsäschare sind beispielsweise durch die DE-OS 20 01 061 bekannt. Dieses Normalsäschar weist einen aus Blech geprägten Scharkörper auf, an dessen vorderer Unterseite mittels Halterungsmittel, die als zwei Schrauben ausgebildet sind, die Scharspitze auswechselbar befestigt ist. Die Scharspitze ist ein Verschleißteil, welches von Zeit zu Zeit je nach Verschleißgrad ausgewechselt werden muss. Es ist sehr zeitaufwendig, die jeweils mittels zweier Schrauben befestigte Scharspitze der Normalsäschare auszuwechseln.

Durch die DE-AS 23 21 859 ist ein weiteres Säschar mit einem Scharkörper und einer Scharspitze bekannt geworden. Die Scharspitze ist als wendbares Element ausgebildet. Auf der einen Seite ist dieses wendbare Teil als Schieppkufe auf der anderen Seite als Ziehschar ausgebildet. Die Scharspitze ist mittig mittels einer einzigen Schraube an dem Scharkörper befestigt. Mittels eines im Bereich des Scharhalters angeordneten Verriegelungsstückes wird der Scharkörper in seiner vorgesehenen Position gegen Verdrehen gesichert. Diese Anordnung ist sehr aufwendig. Darüber hinaus muss die Schraubverbindung relativ groß dimensioniert sein, um die auftretenden Kräfte sicher aufnehmen zu können.

Die amerikanische Patentschrift 53 70 070 zeigt ein Zweischeibensäschar mit einem zwischen den beiden Scheiben angeordneten Furchenformer. Dieser Furchenformer weist eine Scharspitze auf, die an dem Halterungskörper für die beiden Scharscheiben des Zweischeibenschares angeordnet sind. Die Scharspitze weist eine untere Aussparung und eine untere Aussparung auf, in welche in dem Scharkörper angeordnete Bolzen eingreifen. Diese Bolzen dienen als Verdrehsicherung. Weiterhin ist im oberen Bereich einer Halterungsschraube vorgesehen, mittels welcher die Scharspitze an der Halterung befestigt ist.

Der Erfindung liegt die Aufgabe zugrunde, auf einfache Weise eine sichere Befestigung einer austauschbaren Scharspitze bei gleichzeitiger schneller Auswechselbarkeit zu gewährleisten.

Diese Aufgabe wird erfindungsgemäß durch die Merkmale des Patentanspruches 1 gelöst. Infolge dieser Maßnahmen wird in überraschend einfacher Weise eine sehr schnell austauschbare und sicher befestigte Scharspitze bei einem Säschar geschaffen. Die als Verschleißteil ausgebildete Scharspitze kann in kürzester Zeit ausgetauscht werden. Durch die jeweils in die Aussparung des Scharkörpers eingreifende Nase, die an der Scharspitze befestigt ist, wird eine weitestgehende Entlastung der Schraubverbindung sowie eine einfache Ausgestaltung der Halterungsmittel erreicht. Die Schraubverbindung hat überwiegend die Aufgabe eines Sicherungsmittels.

Weiterhin ist es möglich, eine als Schleppschar ausgebildete Scharspitze gegen eine auf Griff stehende Scharspitze oder ein Breitsäschar auszutauschen, um somit verschiedene Schartypen bei einer Sämaschine zu verwirklichen.

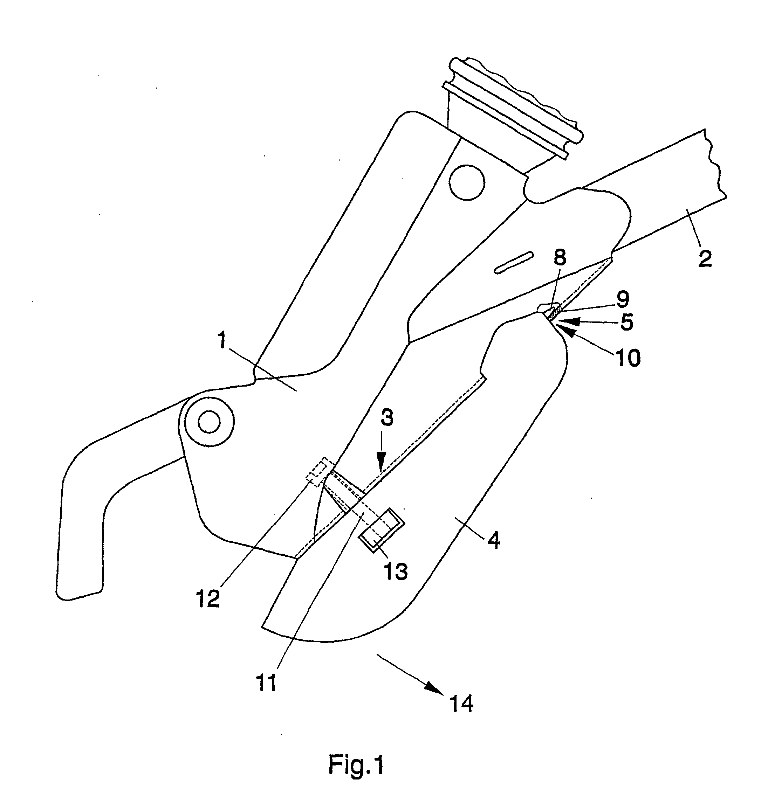

Weitere Einzelheiten der Erfindung sind der Beispielsbeschreibung und den Zeichnungen zu entnehmen. Hierbei zeigen
- Fig.1: das Normalsäschar in Seitenansicht und in Prinzipdarstellung,

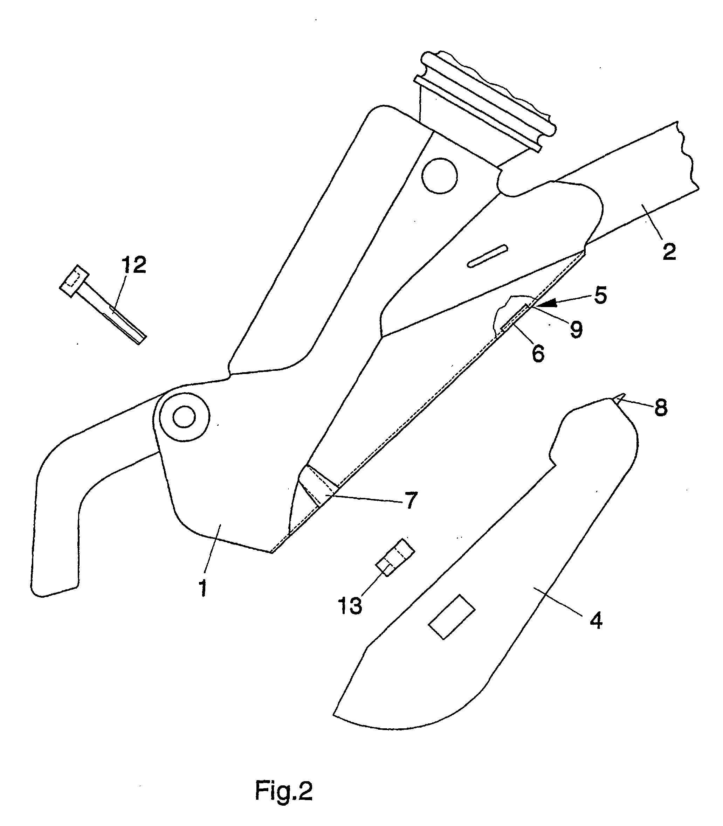

- Fig.2: die Zuordnung der Scharspitze vor der Montage an dem Normalsäschar und

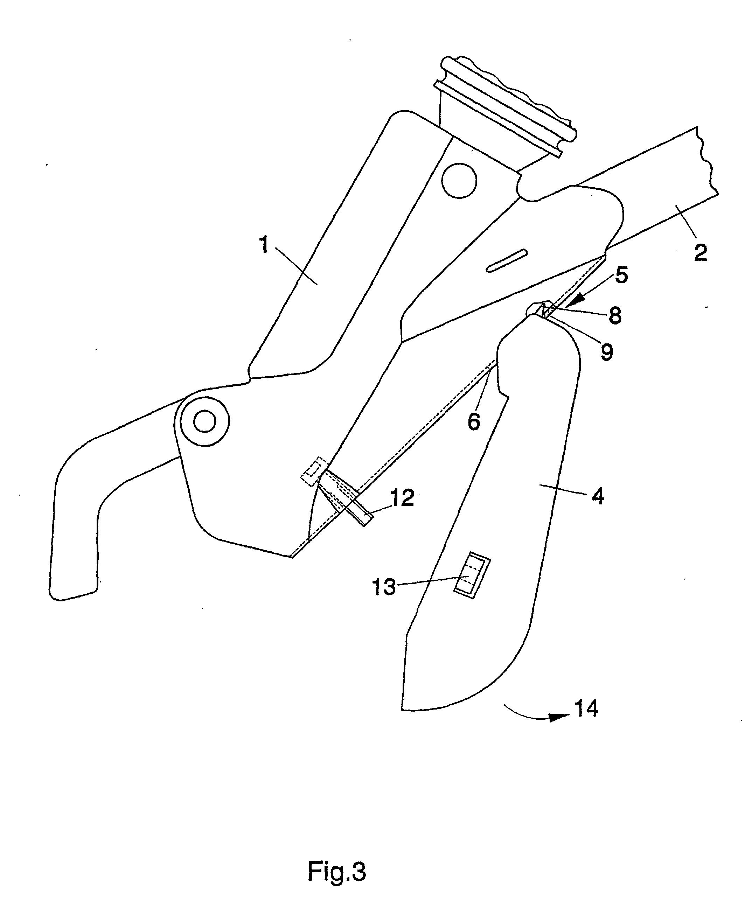

- Fig.3: der erste Schritt des Montagevorganges in Seitenansicht und in Prinzipdarstellung.

Das Normalsäschar weist den Scharkörper 1, der aus einem geprägten Blechteil oder aus einem Kunststoffformteil besteht, auf. An der Oberseite des Scharkörpers 1 ist der Scharhalter 2, der in nicht dargestellter Weise mittels Gelenkmittel an einem ebenfalls nicht dargestellten Scharrahmen einer Sämaschine in aufrechter Ebene bewegbar angeordnet ist, befestigt. Auf der unteren Vorderseite 3 des Scharkörpers 1 ist die leicht auswechselbare Scharspitze 4 angeordnet. Der Scharkörper 1 weist im oberen vorderen Bereich 5 eine Aussparung 6 auf. Im unteren Bereich ist eine als Bohrung 7 ausgebildete Durchtrittsöffnung vorgesehen. Die Scharspitze 4 weist in ihrem oberen Bereich eine Nase 8 auf. Diese Nase 8 fasst nach der Montage der Scharspitze 4 an dem Scharkörper 1 in die Aussparung 6 hinter den Steg 9 des Scharkörpers 1. Hierdurch wird die Steckverbindung 10 gebildet. Im unteren Bereich ist die Schraubverbindung 11, die die Bohrung 7 durchsetzende Schraube 12 aufweist, vorgesehen. Mittels dieser Schraubverbindung 10, wird die Scharspitze 4 in der dargestellten Position sicher am Scharkörper 1 gehalten. Die Schraube 12 ist in einem geschützten Bereich und in einer zur Fahrtrichtung parallelen Ebene verlaufenden Richtung ausgerichtet angeordnet Durch diese Anordnung innerhalb des Scharkörpers 1 kommt die Schraube 12 nicht mit Bodenteilen in Berührung und ist so vor Verschleiß geschützt.

Zum Austausch der Scharspitze 4, beispielsweise nach Verschleiß oder wenn eine anders geformte Scharspitze an dem Scharkörper 1 angebracht werden soll, ist es lediglich erforderlich, in einfacher Weise die Schraubverbindung 10, also die Schraube 12 aus der in der Scharspitze 4 angeordneten Mutter 13 zu drehen, zu lösen, so dass die Scharspitze 4 durch Schwenken der Scharspitze 4 in Pfeilrichtung 14 von dem Scharkörper 1 abgenommen werden kann. Zur Montage der Scharspitze 4 an dem Scharkörper 1 wird zunächst die Nase 8 in die Aussparung 6 gesteckt, so dass die Nase 8 hinter den Steg 9 oberhalb der Aussparung 6 fasst. Anschließend wird die Halteschraube 12 der Schraubverbindung 11 in der Scharspitze 4 eingeschraubt, so dass die Scharspitze 4 sicher am Scharkörper 1 befestigt ist.

Es ist leicht verständlich, dass an Stelle der gezeigten Scharspitze 4, die als Schleppkufe ausgebildet ist, als Breitscharkörper, Meißelscharkörper etc. ausgebildete Scharspitzenelemente am Scharkörper 1 in entsprechender Weise angebracht werden können.

Die Scharspitzen 4 können aus Gussmaterial, Kunststoff, Keramik etc. hergestellt sein.

## Patentansprüche

1. Normalsäschar mit einem Scharkörper (1) und einer auf der unteren Vorderseite des Scharkörpers mittels Halterungsmittel befestigten Scharspitze (4), wobei das obere Halterungsmittel der Scharspitze (4) als Steckverbindung (10) und das untere Halterungsmittel als Schraubverbindung (11) ausgebildet ist, wobei in dem oberen vorderen Bereich des Scharkörpers (1) eine Aussparung (6) angeordnet ist und die Scharspitze (4) eine Nase (8) aufweist, die In die Aussparung (6) fasst.

2. Normalsäschar nach Anspruch 1, **dadurch gekennzeichnet, dass** verschiedenartig geformte Scharspitzen (4) vorgesehen sind.

## Claims

1. Standard sowing coulter including a coulter body (1) and a coulter tip (4), which is mounted by means of retaining means on the lower front face of the coulter body, wherein the upper retaining means of the coulter tip (4) is in the form of a plug-in connection (10) and the lower retaining means is in the form of a screw connection (11), a recess (6) being disposed in the upper front region of the coulter body (1), and the coulter tip (4) having a projection (8), which engages in the recess (6).

2. Standard sowing coulter according to claim 1, **characterised in that** variously shaped coulter tips (4) are provided.

## Revendications

1. Soc de semoir normal comportant un corps de soc (1) et une pointe de soc (4) fixée contre la face avant inférieure du corps de soc à l'aide d'un moyen de fixation, le moyen de fixation supérieur de la pointe de soc (4) étant une liaison enfichée (10) et le moyen de fixation inférieur étant une liaison vissée (11), tandis que la zone supérieure avant du corps de soc (1) comporte une découpe (6) et la pointe de soc (4) comporte un bec (8) qui vient prendre dans la découpe (6).

2. Soc de semoir normal selon la revendication 1.
**caractérisé par**
des pointes de soc (4) de formes différentes.
